# FASCICULE DE BREVET EUROPEEN

(11) **EP 1 911 356 B1**
(45) Date de publication et mention de la délivrance du brevet: **23.03.2011**
(21) Numéro de dépôt: 07118303.2
(22) Date de dépôt: 11.10.2007
(51) Int. Cl.: A23J 3/00, A23L 3/015, A23L 3/3418, A23L 3/3445

(54) **Procédé de préparation, conditionnement, conservation et diffusion à température ambiante de gélatines alimentaires pour nappages et nappages alimentaires**
Verfahren zur Herstellung, Konditionierung, Konservierung und Verteilung von gelierbaren Lebensmitteln für Überzüge und Lebensmittelüberzüge bei Zimmertemperatur
Method of preparing, conditioning, conserving and distributing food gelatines for coatings and food glazing at room temperature

(30) Priorité: 12.10.2006 FR 0608926
(43) Date de publication de la demande: 16.04.2008
(73) Titulaire: Ruga, M. Edoardo, 84600 Valreas (FR)
(72) Inventeur: Ruga, M. Edoardo, 84600 Valreas (FR)
(74) Mandataire: Roman, Alexis

(56) Documents cités:
- FR-A- 2 672 469
- FR-A1- 2 815 226
- VAN DER PLANCKEN I ET AL: "Combined effect of high pressure and temperature on selected properties of egg white proteins" INNOVATIVE FOOD SCIENCE AND EMERGING TECHNOLOGIES, ELSEVIER, AMSTERDAM, NL, vol. 6, no. 1, mars 2005 (2005-03), pages 11-20, XP004914117 ISSN: 1466-8564
- DATABASE FSTA [Online] INTERNATIONAL FOOD INFORMATION SERVICE (IFIS), FRANkFURT-MAIN, DE; 1994, STRANGE E D: "Chemistry and rheology of thiolated and succinylated caseins." XP002435324 Database accession no. 94-1-09-p0004 & DISSERTATION ABSTRACTS INTERNATIONAL, vol. 54, no. 7, 1994, STATE UNIV. OF NEW JERSEY, NEW BRUNSWICK, NJ 08903, USA
- CHEFTEL J-C: "APPLICATIONS DES HAUTES PRESSIONS EN TECHNOLOGIE ALIMENTAIRE" ACTUALITES DES INDUSTRIES ALIMENTAIRES ET AGRO - ALIMENTAIRES, vol. 108, no. 3, 1 mars 1991 (1991-03-01), pages 141-153, XP000563565

## Description

L'invention concerne un procédé de conditionnement et de traitement thermique des protéines gélifiantes d'origine animale ou végétale qui permet de les garder fluides à température ambiante dans leur emballage mais qui gélifient quasi instantanément dès leur application.

Les gélatines alimentaires diluées et les nappages translucides alimentaires d'origine végétale sont largement utilisés en pâtisserie et gastronomie pour glacer et protéger les préparations dont l'aspect et la qualité se détériorent rapidement au contact de l'air, comme, par exemple les tartes aux fruits, les hors d'oeuvres à base de viande et de poisson finement tranchés. Ils durcissent à température ambiante et forment un film protecteur brillant, relativement élastique, qui isole de l'air les préparations culinaires sur lesquelles ils ont été appliqués, en améliorant ainsi leur aspect et en prolongeant leur conservation.

Ils s'apprêtent aujourd'hui facilement grâce à des préparations anhydres des protéines spécifiques qui sont diluées à l'eau, mais dont le pouvoir gélifiant n'est obtenu qu'en les portant à ébullition et en les laissant refroidir. Ils restent fluides à des températures supérieures à 50° C, mais ils gélifient très rapidement à température ambiante. Afin d'obtenir le meilleur résultat en terme de couverture et de brillance, l'utilisateur les applique encore tièdes, au pinceau, sur les préparations culinaires.

Ce mode de préparation et d'application, outre à être long, fastidieux et générateur de gaspillage, présente un risque important de contamination bactériologique car, tout en restant en contact de l'air, les gélatines, en refroidissant, passent par une plage de température de 40° C à 30° C, particulièrement favorable au développement de nombreux micro-organismes.

La présente invention concerne un procédé de préparation des gélatines alimentaires pour nappage et des nappages alimentaires d'origine végétale, permettant de les conserver fluides plusieurs mois à température ambiante dans leur emballage, mais sans altérer leurs qualités gélifiantes dès leur utilisation. Du fait de garder leur fluidité, ils pourront ainsi être directement, uniformément et rapidement étalés par pulvérisation sur les préparations culinaires.

Plus particulièrement, l'invention concerne un procédé de préparation, de conditionnement et de traitement thermique de protéines gélifiantes d'origine animale ou végétale, permettant de les conserver fluides à température ambiante dans leur emballage, et qu'elles gélifient dès leur mise à l'air, caractérisé en ce que les protéines gélifiantes sont :
a) mélangées à de l'eau désoxygénée,
b) conditionnées dans un conteneur hermétique privé d'oxygène,
c) chauffées sous pression d'un gaz alimentaire hydrosoluble à une température comprise entre 95° C et 104° C,
d) laissées refroidir et conservées dans leur emballage pressurisé,
e) diffusées par une valve.

L'invention se base sur la constatation expérimentale montrant que les protéines gélifiantes diluées dans de l'eau désoxygénée, chauffées à une température comprise entre +95° C et +104° C dans une atmosphère privée d'oxygène et sous une pression d'un gaz alimentaire hydrosoluble, tel que le CO₂ ou le N₂O ou un mélange des deux, restent liquide en refroidissant jusqu'à une température de +10°, mais gélifient quasi instantanément à la pression atmosphérique, dès que le gaz alimentaire dissout se sera détendu.

Le présent procédé, tout en faisant appel à des techniques simples et séparément connues, permet la réalisation d'un conteneur de gélatine alimentaire pour nappage ou de nappage alimentaire d'origine végétale qui peuvent être conservés et étalés à température ambiante, avec une importante économie de temps, de manière pratique et hygiénique, directement sur les préparations culinaires. Il consiste:
- à mélanger les protéines gélifiantes d'origine animale ou végétale à l'eau dans une cuve de mélange et de désoxygénation, et prélever le mélange, comme par exemple dans le procédé décrit dans le brevet FR 2.815.226 (RUGA), c'est-à-dire, par une sonde stérilisée à l'extérieur de laquelle est fixé, jusqu'à 5 centimètres du tirant, un tube de petit diamètre par lequel est injecté du N₂, avec un débit de 2 à 3 fois supérieur au débit du tirage ;
- le mélange ainsi prélevé est conditionné dans un conteneur hermétique privé d'oxygène. En pratique, on utilise des flacons du type aérosol préalablement aseptisés et dans lesquels l'oxygène de l'air aura été éliminé, soit par un vide, soit en y injectant du N₂ juste avant leur remplissage. Ces flacons sont remplis aux normes volumétriques des aérosols, selon un procédé de remplissage en anti-contamination bactériologique comme, par exemple, selon le procédé décrit dans le brevet FR 2.635.646 (RUGA), c'est-à-dire en faisant transiter le mélange, dans une mini chambre de décompression dans laquelle est injecté un courant d'azote pressurisé ;
- le flacon ainsi rempli et après y avoir dudgeonné une valve préalablement aseptisée, est pressurisé par injection de 5 à 6 N-volumes d'un gaz alimentaire hydrosoluble (CO₂; N₂O; ou un mélange des deux) ;
- le flacon ainsi rempli et pressurisé est progressivement chauffé et maintenu pendant environ 2 minutes à une température comprise entre 95° C et 104° C. Puis il est progressivement refroidi jusqu'à une température ambiante (environ 20° C).

Dans le flacon sous pression, les molécules protéiniques gélifiantes ainsi conditionnées et chauffées restent séparées par les molécules du gaz alimentaire dissout et elles ne gélifient pas à température ambiante. Le mélange peut être diffusé par la valve et le diffuseur de l'aérosol en particules plus ou moins fines, selon le diamètre des orifices de ces derniers. Lors de la diffusion, le gaz dissout se détend quasi instantanément et les molécules protéiniques gélifient, formant un film brillant, consistant et relativement élastique qui protège la préparation culinaire (pâtissière ou gastronomie) sur laquelle il a été diffusé.

Le flacon peut être utilisé en une ou plusieurs fois, sans altérer la qualité ou la durée de vie de la gélatine ou du nappage restant dans le flacon. Il permet d'appliquer à température ambiante la gélatine alimentaire pour nappage et le nappage translucide d'origine végétale de manière pratique, hygiénique et sans gaspillage.

Les gélatines et les nappages ainsi conditionnés peuvent être aussi aromatisés et/ou épicés lors de leur mélange à l'eau, car les arômes et/ou épices ne subissant pas d'évaporation lors du réchauffement seront restitués dans leur intégralité.

## Revendications

1. Procédé de préparation, de conditionnement et de traitement thermique de protéines gélifiantes d'origine animale ou végétale, permettant de les conserver fluides à température ambiante dans leur emballage, et qu'elles gélifient dès leur mise à l'air, **caractérisé en ce que** les protéines gélifiantes sont :
a) mélangées à de l'eau désoxygénée,
b) conditionnées dans un conteneur hermétique privé d'oxygène,
c) chauffées sous pression d'un gaz alimentaire hydrosoluble à une température comprise entre 95° C et 104° C,
d) laissées refroidir et conservées dans leur emballage pressurisé,
e) diffusées par une valve.

2. Procédé selon la revendication 1, **caractérisée en ce que** les protéines gélifiantes d'origine végétale ou animale sont aromatisées et/ou épicées lors de leur mélange à l'eau.

## Claims

1. Method for preparing, packaging and heat treating animal or plant gelling proteins to enable them to be preserved in a fluid state in their packaging at ambient temperature, and which gel as soon as they come into contact with the air, **characterised in that** the gelling proteins are:
a) mixed with deoxygenated water,
b) packaged in an oxygen-free sealed container,
c) heated under pressure by a hydro-soluble food quality gas at a temperature of between 95°C and 104°C,
d) left to cool and preserved in their pressurised packaging,
e) diffused through a valve.

2. Method according to claim 1, **characterised in that** the gelling proteins of plant or animal origin are perfumed and/or spiced at the time of their mixing with water.

## Patentansprüche

1. Verfahren zur Vorbereitung, Verpackung und Wärmebehandlung von gelbildenden Proteinen tierischer oder pflanzlicher Herkunft, das in der Lage ist, diese bei Raumtemperatur in ihrer Verpackung in flüssigem Zustand zu erhalten und die Gelbildung einleitet, wenn diese mit Luft in Berührung kommen, **gekennzeichnet dadurch, dass** die gelbildenden Proteine :
a) mit sauerstofffreiem Wasser gemischt sind,
b) in einem dicht schließenden, sauerstofffreien Behälter verpackt sind,
c) in einem wasserlöslichen, lebensmitteltauglichen Gas unter Druck bei einer Temperatur von 95°C bis 104 °C erwärmt werden,
d) abgekühlt und in ihrer Verpackung unter Druck konserviert werden,
e) durch ein Ventil ausgegeben werden.

2. Verfahren gemäß Patentanspruch 1, **gekennzeichnet dadurch, dass** die gelbildenden Proteine pflanzlicher oder tierischer Herkunft beim Mischen mit Wasser aromatisiert und/oder gewürzt werden.
